Europäisches Patentamt

European Patent Office

Office européen des brevets

(19)

(11) Publication number: **0 265 211 B1**

## EUROPEAN PATENT SPECIFICATION

(12)

(45) Date of publication of patent specification: **30.12.92**   (51) Int. Cl.⁵: **B62D 5/04**

(21) Application number: **87309225.8**

(22) Date of filing: **19.10.87**

(54) **Control apparatus for electrically driven power steering system, power steering system, and fork lift truck.**

(30) Priority: **18.10.86 JP 248166/86**

(43) Date of publication of application:
**27.04.88 Bulletin  88/17**

(45) Publication of the grant of the patent:
**30.12.92 Bulletin  92/53**

(84) Designated Contracting States:
**DE FR GB**

(56) References cited:
DE-A- 3 504 561      DE-A- 3 537 024
FR-A- 2 552 387      GB-A- 2 154 523
GB-A- 2 161 770      GB-A- 2 164 303

PATENT ABSTRACTS OF JAPAN, vol. 10, no.
311 (M-528)[2367], 23rd October 1986; & JP-
A-61 122 078 (FUJI HEAVY IND. LTD)
10-06-1986

PATENT ABSTRACTS OF JAPAN, vol. 10, no.
307 (M-527)[2363], 18th October 1986; & JP-
A-61 119 466 (FUJI HEAVY IND. LTD)
06-06-1986

(73) Proprietor: **Kabushiki Kaisha Toyoda Jidoshokki Seisakusho**
**1, Toyoda-cho 2-chome, Kariya-shi**
**Aichi-ken 448(JP)**

(72) Inventor: **Hayashi, Takashi c/o K. K. Toyoda Jidoshokki**
**Seisakusho 1, Toyoda-cho, 2-chome**
**Kariya-shi Aichi-Ken(JP)**

(74) Representative: **Robinson, John Stuart et al**
**MARKS & CLERK 57/60 Lincoln's Inn Fields**
**London WC2A 3LS(GB)**

## Description

This invention relates to a battery powered load carrying vehicle such as defined in the preamble of claim 1.

A battery powered fork lift truck of this type is disclosed for example in a Japanese Laid-open Utility Model Publication No. 107682/1986 corresponding to U.S. Patent No. 4,676,331. In this system, when the steering wheel of the fork lift truck is turned, the torque produced by the manipulation is sensed by a torque sensor and steering torque signals are sent to the controller from a potentiometer mounted to the torque sensor. The controller generates drive power for a steering assist servo motor in accordance with prescribed steering assist characteristics determined on the basis of the torque signals generated from the potentiometer and the steering assist force being supplied from the servo motor to the steering mechanism.

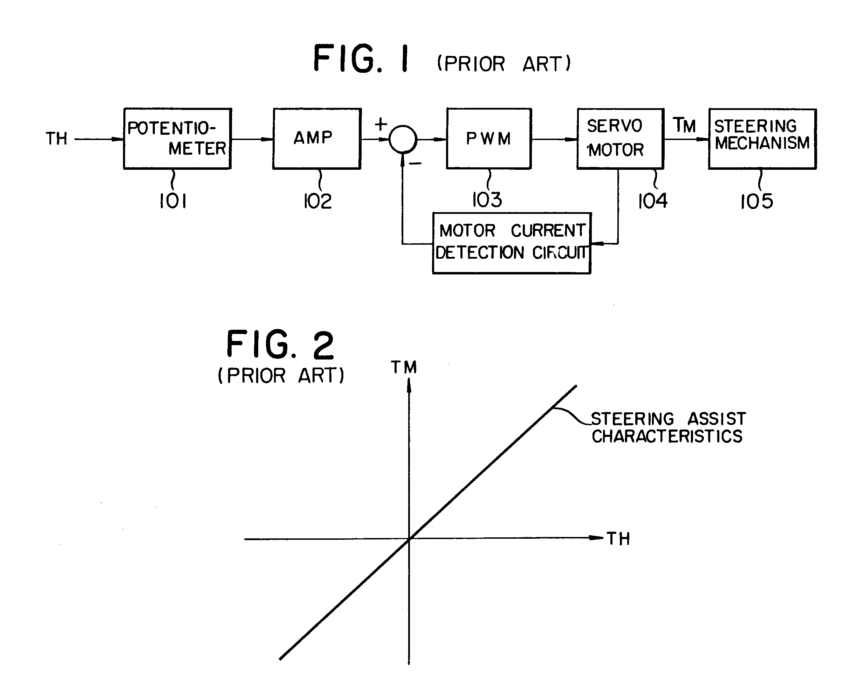

In the conventional controller shown in Figure 1 of the accompanying drawings, the signal corresponding to the steering force TH is generated by a potentiometer 101 and amplified in an amplifier 102. The amplified signal is modulated and controlled in, for example, a pulse width modulation control circuit (PWM) 102, which then generates a drive output to a servo motor 104 on the basis of the pulse width modulation control and the feedback control. The servo motor 104 then generates a steering assist force for a steering mechanism 105 on the basis of a linear steering assist characteristic as illustrated in Figure 2 of the accompanying drawings.

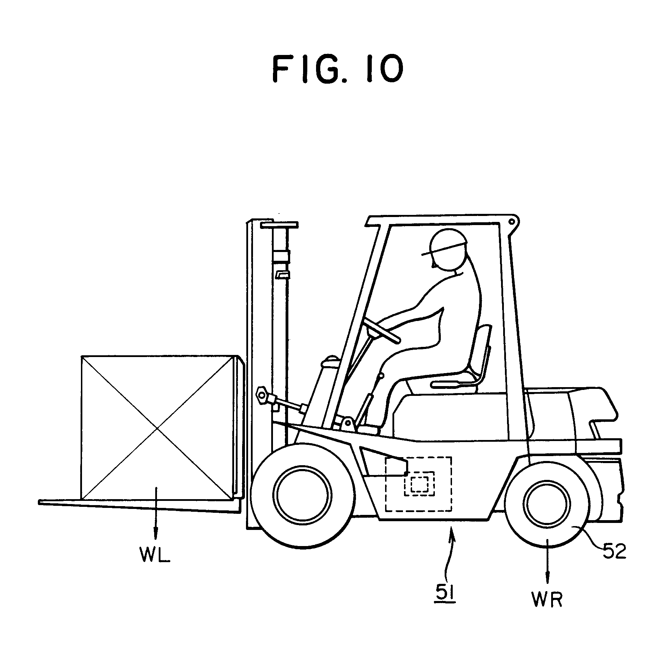

The above described electrically driven power steering control device generates a steering assist force $T_M$ with linear steering assist characteristics, as illustrated in Figure 2. Thus, the larger the load WL placed on the fork lift truck 51, the more the steering wheel 52 is shifted in the floating direction as shown in Figure 10, whereby a load WR thereof becomes smaller, and driving torque for driving thereof becomes smaller. Thus the conventional electrically driven power steering control device has a drawback that, since the steering assist characteristics remain constant despite changes in the load weight, the steering feels too light to the operator for a larger load WL or for a higher travelling speed of the fork lift truck, so that the operator will have only an unstable feel when operating the handle. Moreover, this system is very wasteful of power in a battery driven fork lift vehicle since the battery can only hold a finite charge which can quickly become exhausted, necessitating recharging.

German Patent Specification 3 504 561 (equivalent to United States Patent Specification 4 602 695) relates to a control device for a power steering apparatus for controlling a torque applied to the apparatus in accordance with the travelling conditions of the vehicle and the load condition of the vehicle. This prior art document is specifically directed to automobiles in which the power steering assist force is increased as the load on the vehicle's wheels increases.

We have now found that this undesirable power wastage can be mitigated by providing, in accordance with the present invention, a battery powered load carrying vehicle, provided with an electrically driven power steering system arranged to be controlled by a control apparatus, the apparatus comprising a torque sensor for generating a torque signal corresponding to steering torque applied to a steering wheel, a control circuit for supplying a steering assistance control signal to a steering assistance motor, and a load weight sensor for generating a load weight signal corresponding to the weight of a load on the vehicle; characterised in that the load carrying vehicle is of the type wherein the load on the steerable wheels decreases as the transported load increases, and the control circuit generates the steering assistance control signal from the torque signal and the load weight signal in accordance with a steering assistance characteristic which is such that the steering assistance decreases with increasing load for a given applied steering torque.

Preferred embodiments of the invention are defined in the other appended claims.

It is thus possible to provide a control apparatus for an electrically driven power steering system for a fork lift truck wherein the operator has a constant and stable steering feel by determining steering assist characteristics according to the load weight on a fork lift truck or the load weight and the speed thereof and generating steering assist power in response to the determined steering assist characteristics even when the load weight and/or the travelling speed of the truck is changed.

It is also possible to provide such control apparatus which is simple in structure and low in manufacture costs.

A control apparatus for an electrically driven power steering system for a fork lift truck, in a first preferred embodiment, is arranged so that the steering assist force is generated from a steering assist electric motor when a steering wheel of the fork lift truck is turned for steering the fork lift truck. The control apparatus includes a torque sensor for generating a torque signal which corresponds to steering torque applied to the steering wheel. The control apparatus also includes a load weight sensor for sensing the weight of the load placed on the fork lift truck for generating a load weight signal corresponding to the load weight. A control circuit determines steering assist characteristics based on the torque signals supplied thereto from the torque sensor and the load signal generated by the weight sensor and generates drive power for the steering assist motor in accordance with the thus determined steering assist characteristics.

A control apparatus for an electrically driven power steering system for a fork lift truck, in a second embodiment, is arranged so that the steering assist force is generated by a steering assist electric motor when a steering wheel of a fork lift truck is turned for steering the fork lift truck. The control apparatus includes a torque sensor for producing a torque signal corresponding to a steering torque applied to the steering wheel, a load weight sensor for sensing the weight of the load placed on the fork lift truck for generating the load weight signal corresponding to the load weight, a truck speed sensor for sensing the running speed of the truck and generating a speed signal corresponding to the truck speed, and a control circuit for determining steering assist characteristics based on the torque signals supplied thereto from the torque sensor, the load weight signals supplied thereto from the load weight sensor, and the speed signal supplied thereto from the truck speed sensor for supplying the drive power to the steering assist motor in accordance with the thus determined steering assist characteristics.

Thus, when the driver turns the steering wheel for steering the fork lift truck, with goods of load weight WL placed thereon, torque signals corresponding to the steering torque are generated by the torque sensor. Further, load signals are generated by the load weight sensor. The torque signals and the load weight signals are supplied to the control circuit which then determines steering assist characteristics in accordance with the respective input signals so as to generate driving electric power for the steering assist motor in accordance with the determined steering assist characteristics for assisting the steering.

When the speed sensor is provided on the fork lift truck for generating the speed signals, steering assist characteristics are determined in accordance with the torque signals, the load weight signals and the speed signals, and the driving electric power is supplied by the control circuit to the steering assist motor in accordance with the thus determined steering assist characteristics for assisting the steering.

Preferably, the steering assist characteristics are determined in accordance with the weight of the load placed on the fork lift truck and the running speed of the truck, such that a large steering assist force is generated when there is no load on the truck and a large steering torque is required, whereas a small steering assist force is generated when a small steering force suffices because the load is placed on the truck. In such a manner, the handle manipulation is stabilized and steering may be performed with a better steering feel.

When the vehicle speed sensor is provided, the running speed of the truck is preferably simultaneously considered in determining the steering assist force such that the steering feels light when the truck is running at a low speed and feels heavy when the truck is running at a higher speed, thus providing a still better steering feel.

The invention will be further described, by way of example, with reference to the accompanying drawings, in which :

Figure 1 is a block diagram showing a conventional electric control system;

Figure 2 is a graph showing conventional steering assist characteristics, wherein the steering force TH and the steering assist force TM are plotted on the horizontal and vertical axes, respectively;

Figure 3 shows diagrammatically a control apparatus for an electrically driven power steering system for a fork lift truck constituting a preferred embodiment of the present invention;

Figure 4 is a side elevation, shown partially in cross section, of a torque sensor employed in the control apparatus shown in Figure 3;

Figure 5 is a block diagram showing an electric control system constituting a first embodiment of the invention;

Figure 6 shows diagrammatically an hydraulic pressure sensor system;

Figures 7 and 8 are graphs showing steering assist characteristics, wherein in Figure 8 the steering force $T_H$ and the steering assist force $T_M$ are plotted on the horizontal and vertical axes, respectively;

Figure 9 is a block diagram showing an electric control system constituting a second embodiment of the invention; and

Figure 10 shows diagrammatically a fork lift truck being steered with a load placed thereon.

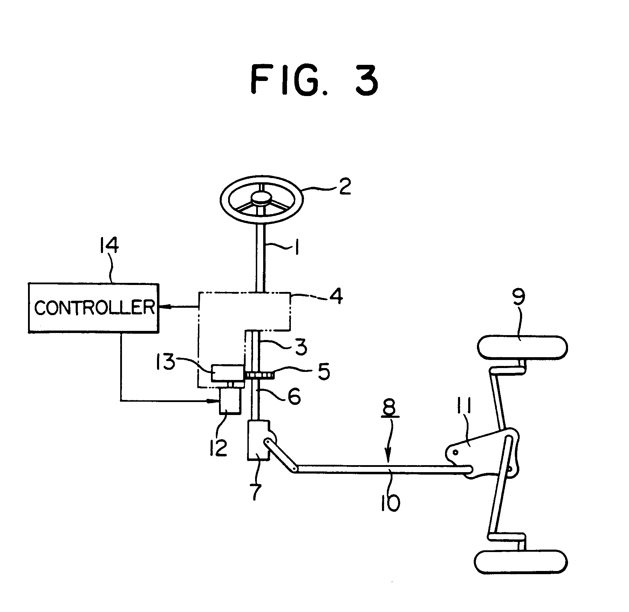

Figure 3 illustrates an electrical power steering unit of a counter-balance type fork lift truck. In the drawing, the numeral 1 denotes a first shaft to which a steering wheel 2 is secured. The numeral 3 denotes a second shaft connected to the first shaft 1 via a resilient coupling 4. The second shaft 3 is connected to a steering mechanism 8 through a gear 5, a transmission shaft 6 and a gearbox 7. A steering drive wheel 9 is attached to the steering mechanism 8 through a link 10 and a ball crank 11. The numeral 12 denotes a servo motor for steering, which is arranged to rotate the second shaft 3 through a speed reducing gearing 13 and the gear 5 under the commands given by a controller 14 as described hereinafter.

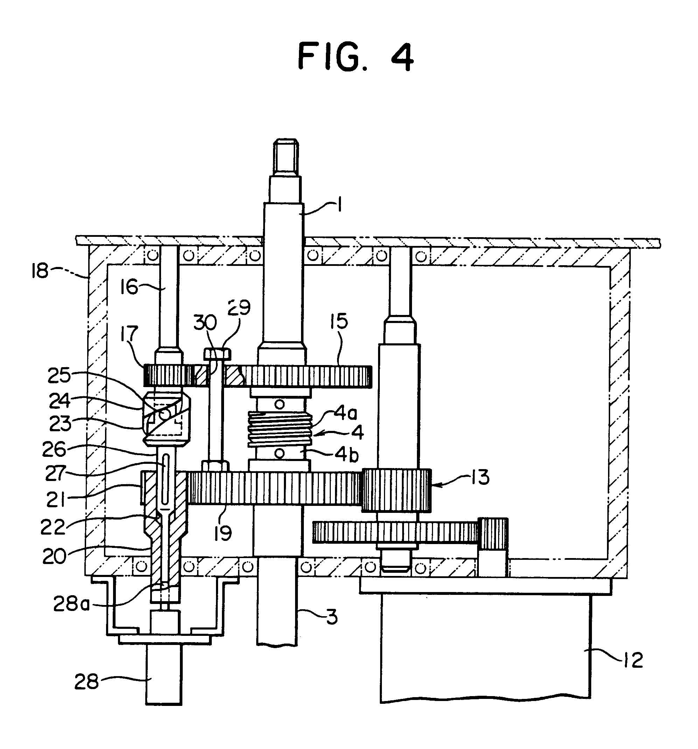

For detecting the steering torque applied to the steering wheel 2, a torque detecting unit disclosed in the aforementioned Japanese Laid-open Utility Model publication No. 107682/1986 corresponding to U.S.P.4,676,331 and shown in Figure 4 hereof is employed. The torque detecting unit operates in such a way that, when the first shaft 1 is turned to the left or right in Figure 3, a spring 4a of the resilient coupling 4 is twisted in dependence upon the force of manipulation applied to the steering wheel 2 within a prescribed angular extent, thus producing a relative angular displacement of, for example, about 5°, between the first shaft 1 and the second shaft 3. Within the extent of such relative angular displacement, a supporting shaft 16 is turned by way of a large gear 15 of the first shaft 1 and a pinion 17, while a roller 25 of the supporting shaft 16 thrusts a cylindrical cam 24 up or down, so that a cam shaft 26 of the cylindrical cam 24 is moved up or down in a vertically extending vertical slot 22 formed in a supporting shaft 20. When the gear ratio between the large gear 15 on the first shaft 1 and the pinion 17 and that between a large gear 19 on the second shaft 3 and a pinion 21 are set so as to be equal to each other, a rotational deviation equal to a number of times the gear ratio is produced between the supporting shaft 16 on the first shaft 1 and the supporting shaft 20 on the second shaft 3.

The translational deviation of the cam shaft 26 is amplified in this manner and the thus-amplified translational deviation is sensed by a potentiometer 28, which supplies torque signals indicating the displacement and the direction thereof to the controller 14. The potentiometer 28, a pressure sensor 55 for generating load signals corresponding to the load on the fork lift truck as described hereinafter, and, in a second embodiment, a speed sensor 71 for generating speed signals corresponding to the speed of the truck are connected to the controller 14. The servo motor 12 is driven under the commands of the controller 14 to cause the second shaft 3 to be rotated through the speed reducing gearing 13 and the gear 5 for driving the steering mechanism 8 so as to turn the steering drive wheel 9 to the right or left. With the above construction, a torque signal corresponding to the linear displacement of the cam shaft 26 supplied from the potentiometer 28, the aforementioned load signal and, in the second embodiment as described hereinafter, the speed signals are supplied to the controller 14 which is arranged to supply driving electric power to the servo motor 12 to cause its rotation to generate the steering assistive force for assisting in manipulating the steering wheel 2.

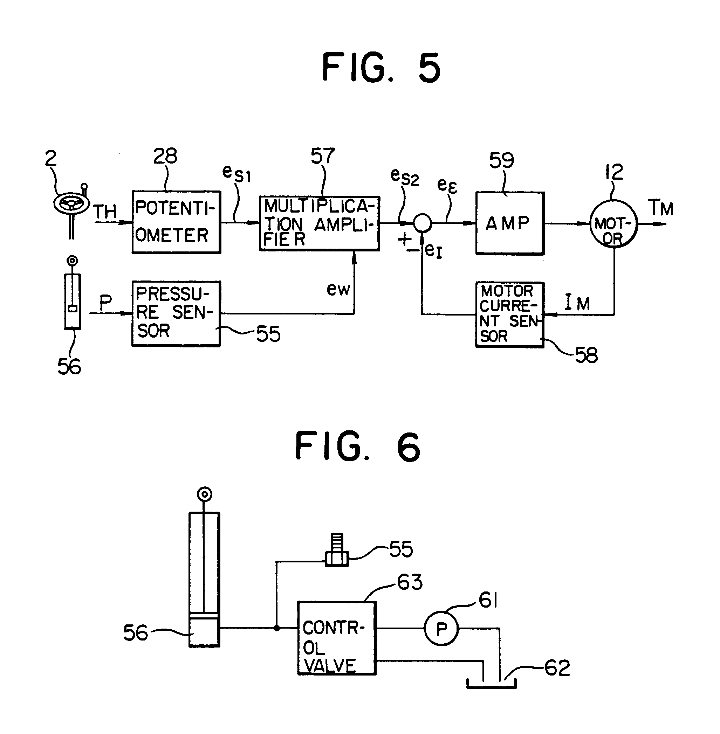

Referring to Figures 5 to 8, a first embodiment of an electrically driven power steering control system for a fork lift truck making use of the above described torque sensor will be described.

Figure 5 is a block diagram showing the first embodiment in its entirety wherein a steering force $T_H$ produced when an operator manipulates the steering wheel as described above is sensed by the torque sensor and a torque signal $e_{s1}$ corresponding to the steering force $T_H$ is generated by the potentiometer 28. For sensing the load when goods are placed on the truck fork, a pressure sensor 55 is provided for sensing the hydraulic force P of a hydraulic light cylinder 56 for lifting and lowering the fork, and a load signal ew corresponding to the hydraulic pressure P and proportional to the load is generated by the pressure sensor 55.

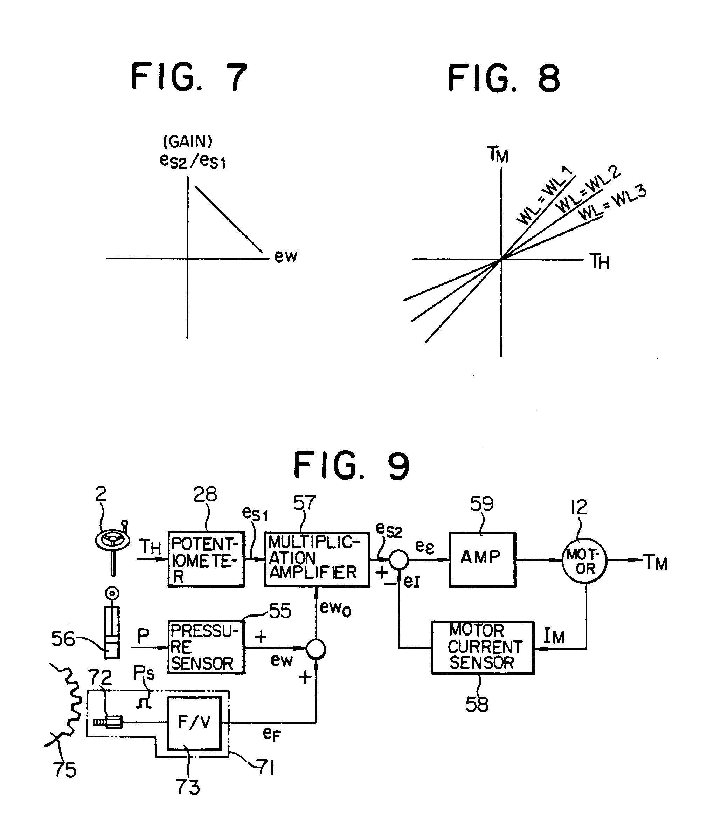

The torque signal $e_{s1}$ and the load signal ew are amplified in a multiplication amplifier 57 from which an amplified signal $e_{s2}$ is generated. The gain $e_{s2}/e_{s1}$ of the multiplication amplifier 57 is controlled such that, as shown in Figure 7, the gain becomes smaller as the magnitude of the load signal ew becomes larger, that is, the weight of the goods placed on the truck fork becomes larger.

The output signal $e_{s2}$ of the multiplication amplifier 57 is compared with an output signal $e_l$ of a motor current sensor 58 sensing the drive current $I_M$ of the servo motor 12 for steering assistance constituting the feedback signal, to generate an error difference or control signal $e_\epsilon$. The control signal $e_\epsilon$ is supplied to an amplifier 59 for generating driving electrical power for the servo motor 12 by pulse width modulation of the input control signal $e_\epsilon$ so as to drive the servo motor 12 for supplying the steering assistive force $T_M$ to the steering mechanism.

Figure 6 illustrates a system for sensing the hydraulic pressure developed by the lift cylinder 56. As shown therein, the pressure oil is sucked by an hydraulic pump 61 from an oil tank 62 and supplied to the lift cylinder 56 through the control valve 63 to actuate the lift cylinder 56 for placing the goods on the truck fork. The pressure P of the pressure oil prevailing at the time the fork is stopped at the desired height is sensed by the pressure sensor 55 which then generates the aforementioned load signal ew.

With the above described control arrangement, the steering assistive force $T_M$ generated by the servo motor 12 when the steering wheel 2 is operated with a steering force $T_H$ is controlled in accordance with the teering assist characteristics determined by the weight WL of the load placed on the fork, as indicated in the diagram of Figure 8. The load weights shown in Figure 8 are in the order of relative magnitudes of WL1 < WL2 < WL3. The steering assist force $T_M$ is thus larger for the lowest load weight WL1 on the fork and is smaller for the largest load weight WL3 for each value of the steering force $T_H$.

Referring to Figure 9, a second embodiment of an electrically driven power steering control system for a fork lift truck making use of the previously described torque sensor is described.

As shown in Figure 9, the speed sensor 71 for sensing the travelling speed of the truck is added to the overall control system of the first embodiment shown in Figure 5. In the second embodiment, the steering assist force decreases with increases in the travelling speed of the fork lift truck so that the steering will feel heavier to the operator and the stability of operation is improved. The speed sensor 71 comprises of a proximity switch 72 for sensing the teeth of a suitable gear 75 that is rotated during running of the fork lift truck for generating interrupted pulse signals $P_s$, and frequency-to-voltage (F/V) conversion circuit 73 for receiving and converting the pulse signals $P_s$ into analog signals. A speed signal $e_F$ generated by the F/V conversion circuit 73 is summed with the load signal ew generated by the pressure sensor 55 and the resulting sum signal $ew_o$ is supplied to the multiplication amplifier 57. The multiplication amplifier 57 has characteristics such that the gain thereof is changed with the signal $ew_o$ so that, when the weight of the goods on the fork remains constant, the gain thereof becomes smaller with increasing travelling speed of the fork lift truck.

The output signal $e_{s2}$ of the multiplication amplifier 57 is compared with the signal $e_l$ from the motor current sensor 58 to generate the control signal $e_\epsilon$ as in the first embodiment, and the signal $e_\epsilon$ is supplied to the amplifier 59 which then supplies the driving power corresponding to the signal $e_\epsilon$ to the servo motor 12 which generates the steering assist force $T_M$ based on steering assist characteristics determined by the load weight and the truck speed.

In the above described first and second embodiments, the control circuit may be designed as an analogue control circuit or as a digital control circuit, for instance incorporating a microcomputer, by partially changing the circuit configuration if necessary.

## Claims

1. A battery powered load carrying vehicle, provided with an electrically driven power steering system arranged to be controlled by a control apparatus, the apparatus comprising a torque sensor for generating a torque signal ($e_{s1}$) corresponding to steering torque applied to a steering wheel (2), and a control circuit (14) for supplying a steering assistance control signal ($e_{s2}$) to a steering assistance motor (12), characterised in that the load carrying vehicle is of the type wherein the load on the steerable wheels decreases as the transported load increases, in that a load weight sensor (55) is provided for generating a load weight signal corresponding to the weight of a load on the vehicle, and in that the control circuit (14, 57-59) generates the steering assistance control signal ($e_{s2}$) from the torque signal ($e_{s1}$) and the load weight signal (ew) in accordance with a steering assistance characteristic which is such that the steering assistance decreases with increasing load for a given applied steering torque.

2. A vehicle according to Claim 1, characterized in that the torque sensor comprises a potentiometer (28) and the load weight sensor comprises a pressure transducer (55).

3. A vehicle according to Claim 1 or 2, characterized by comprising a speed sensor (71-73) for generating a speed signal ($e_F$) corresponding to the speed of the vehicle and characterized in that the control circuit (14, 57-59) receives the speed signal ($e_F$) and generates the steering assistance control signal ($e_{s2}$) from the torque signal ($e_{s1}$), the load weight signal (ew), and the speed signal ($e_F$), the steering assist force decreasing as the speed of the vehicle increases.

4. A vehicle according to Claim 3, characterised in that the speed sensor (71) comprises a proximity transducer (72) for sensing the teeth of a toothed wheel (75) and for generating pulse signals, and a frequency-to-voltage converter (73) for converting the pulse signals to analogue signals.

5. A vehicle according to any one of the preceding claims, characterized in that the control circuit comprises a multiplier (57) for multiplying the torque signal ($e_{s1}$) by the load weight signal (ew) to form the steering assistance control signal ($e_{s2}$).

6. A vehicle according to Claim 3 or 4, characterized in that the control circuit comprises means (57) for multiplying the torque signal ($e_{s1}$) by the sum of the load weight signal (ew) and the speed signal ($e_F$).

7. A load carrying vehicle according to any preceding claim, characterized by comprising a fork lift truck.

## Patentansprüche

1. Batterieangetriebenes, lasttragendes Fahrzeug mit einem elektrisch angetriebenen Servolenksystem, das durch eine Steuervorrichtung gesteuert wird, die einen Drehmomentsensor zum Erzeugen eines Drehmomentsignals ($e_{s1}$) umfaßt, das dem am Lenkrad (2) aufgebrachten Lenkmoment entspricht und einen Steuerschaltkreis (14) zum Zuführen eines Servolenksteuersignals ($e_{s2}$) an einen Lenkservomotor (12),
dadurch **gekennzeichnet,**

- daß das lasttragende Fahrzeuge eine Bauart hat, bei der die Last auf den lenkbaren Rädern dann abnimmt, wenn die beförderte Last zunimmt,
- daß ein Ladungsgewichtssensor (55) vorgesehen ist zum Erzeugen eines Ladungsgewichtssignals, das dem Gewicht der Last auf dem Fahrzeug entspricht
- und daß der Schaltkreis (14, 57-59) das Servolenksteuersignal ($e_{s2}$) aus dem Drehmomentsignal ($e_{s1}$) und dem Ladungsgewichtsignal (ew) in Übereinstimmung mit der Servolenkcharakteristik erzeugt, die so ist, daß die Lenkhilfe für ein gegebenes, aufgebrachtes Lenkmoment dann abnimmt, wenn die Last zunimmt.

2. Fahrzeug nach Anspruch 1, dadurch gekennzeichnet, daß der Drucksensor einen Potentiometer (28) umfaßt und daß der Ladungsgewichtsensor einen Druck-Meßwandler (55) umfaßt.

3. Fahrzeug nach Anspruch 1 oder 2, dadurch gekennzeichnet, daß

- ein Geschwindigkeitssensor (71-73) zum Erzeugen eines Geschwindigkeitssignals ($e_F$) vorhanden ist, das der Geschwindigkeit des Fahrzeuges entspricht und
- daß der Steuerschaltkreis (14, 57-59) das Geschwindigkeitssignal ($e_F$) empfängt und ein Servolenksteuersignal ($e_{s2}$) aus dem Drehmomentsignal ($e_{s1}$), dem Ladungsgewichtsignal (ew) und dem Geschwindigkeitssignal ($e_F$) bildet, wobei die Servolenkkraft dann abnimmt, wenn die Geschwindigkeit des Fahrzeuges zunimmt.

4. Fahrzeug nach Anspruch 3, dadurch gekennzeichnet, daß der Geschwindigkeitssensor (71) einen Näherungsschalter zum Fühlen der Zähne eines gezahnten Rades (75) umfaßt sowie zum Erzeugen von Impulssignalen sowie einen Frequenz-in-Spannung-Umwandler (73) zum Umwandeln der Impulssignale in analoge Signale.

5. Fahrzeug nach einem der vorangegangenen Ansprüche, dadurch gekennzeichnet, daß der Steuerschaltkreis einen Vervielfältiger (57) zum Vervielfältigen des Drehmomentsignals ($e_{s1}$) mit dem Ladungsgewichtsignal (ew) umfaßt, um ein Servolenksignal ($e_{s2}$) umfaßt.

6. Fahrzeug nach einem der Ansprüche 3 oder 4, dadurch gekennzeichnet, daß der Steuerschaltkreis eine Vorrichtung (57) zum Vervielfältigen des Drehmomentsignals ($e_{s1}$) mit der Summe des Ladungsgewichtsignals (ew) und des Geschwindigkeitssignals ($e_F$) umfaßt.

7. Fahrzeug nach einem der vorangegangenen Ansprüche, dadurch gekennzeichnet, daß es ein Gabelstapler ist.

**Revendications**

1. Véhicule porteur de charge à batterie, équipé d'un système de commande pour direction assistée électriquement conçu pour être commandé par un appareil de commande, l'appareil comprenant un détecteur de couple pour produire un signal de couple ($e_{s1}$) correspondant au couple de braquage appliqué à un volant de direction (2), et un circuit de commande (14) pour fournir un signal de commande d'assistance au braquage ($e_{s2}$) à un moteur d'assistance au braquage (12), caractérisé en ce que le véhicule porteur de charge est du type dans lequel la charge exercée sur les roues directionnelles du véhicule diminue au fur et à mesure que la charge transportée augmente, en ce qu'un détecteur de poids de charge (55) est prévu pour produire un signal de poids de charge correspondant au poids d'une charge sur le véhicule, et en ce que le circuit de commande (14, 57-59) produit le signal de commande d'assistance au braquage ($e_{s2}$) à partir du signal de couple ($e_{s1}$) et du signal de poids de charge (ew) eu accord avec une caractéristique d'assistance au braquage qui est telle que l'assistance au braquage diminue au fur et à mesure que la charge augmente pour un couple de direction appliquée donné.

2. Véhicule selon la revendication 1, caractérisé en ce que le détecteur de couple comprend un potentiomètre (28) et le détecteur de poids de charge comprend un capteur de pression (55).

3. Véhicule selon la revendication 1 ou 2, caractérisé en ce qu'il comprend un capteur de vitesse (71-73) pour produire un signal de vitesse ($e_F$) correspondant à la vitesse du véhicule et caractérisé en ce que le circuit de commande (14, 57-59) reçoit le signal de vitesse ($e_F$) et produit le signal de commande d'assistance au braquage ($e_{s2}$) à partir du signal de couple ($e_{s1}$), du signal de poids de charge (ew) et du signal de vitesse ($e_F$), la force d'assistance au braquage diminuant au fur et à mesure que la vitesse du véhicule augmente.

4. Véhicule selon la revendication 3, caractérisé en ce que le capteur de vitesse (71) comprend un capteur de proximité (72) pour capter les dents d'une roue dentée (75) et pour produire des signaux d'impulsion, et un convertisseur fréquence-tension (73) pour convertir les signaux d'implusion en des signaux analogiques.

5. Véhicule selon l'une des revendications précédentes, caractérisé en ce que le circuit de commande comprend un multiplicateur (57) pour multiplier le signal de couple ($e_{s1}$) par le signal de poids de charge (ew) pour former le signal de commande d'assistance au braquage ($e_{s2}$).

6. Véhicule selon la revendication 3 ou 4, caractérisé en ce que le circuit de commande comprend des moyens (57) pour multiplier le signal de couple ($e_{s1}$) par la somme du signal de poids de charge (ew) et le signal de vitesse ($e_F$).

7. Véhicule porteur de charge selon l'une des revendications précédentes, caractérisé en ce qu'il comprend un chariot élévateur à fourche.

# FIG. 1 (PRIOR ART)

TH → [POTENTIO-METER] 101 → [AMP] 102 → + ⊖ − → [PWM] 103 → [SERVO MOTOR] 104 → TM → [STEERING MECHANISM] 105

[MOTOR CURRENT DETECTION CIRCUIT]

# FIG. 2 (PRIOR ART)

STEERING ASSIST CHARACTERISTICS

EP 0 265 211 B1

# FIG. 3

# FIG. 4

# FIG. 5

# FIG. 6

# FIG. 7

(GAIN)
$e_{S2}/e_{S1}$

$e_w$

# FIG. 8

$T_M$

WL=WL1
WL=WL2
WL=WL3

$T_H$

# FIG. 9

| 2 | 28 | $e_{S1}$ | 57 | $e_{S2}$ | $e_\varepsilon$ | 59 | 12 |

$T_H$ → POTENT-IOMETE-R → MULTIPLIC-ATION AMPLIFIER → $+$ ○ $e_\varepsilon$ → AMP → MOT-OR → $T_M$

$e_I$ $-$

$ew_0$

56 → P → PRESSU-RE SENSOR 55 $+$ ○ $e_w$ $+$

MOTOR CURRENT SENSOR → $I_M$

58

72 $P_S$

75 → F/V 71 → $e_F$

73

# FIG. 10